Europäisches Patentamt

European Patent Office (11) Numéro de publication : **0 128 621 B1**

Office européen des brevets

(12) **FASCICULE DE BREVET EUROPÉEN**

(45) Date de publication du fascicule du brevet :
28.09.88

(51) Int. Cl.⁴ : **B 60 J 5/04**

(21) Numéro de dépôt : 84200793.2

(22) Date de dépôt : 04.06.84

(54) Porte avec structure en boîte, pour véhicules, et procédé pour sa fabrication.

(30) Priorité : 10.06.83 IT 6763883

(43) Date de publication de la demande :
19.12.84 Bulletin 84/51

(45) Mention de la délivrance du brevet :
28.09.88 Bulletin 88/39

(84) Etats contractants désignés :
CH DE FR GB LI NL SE

(56) Documents cités :
DE-A- 2 739 178
FR-A- 1 597 263
US-A- 2 438 185

(73) Titulaire : RENAULT ITALIA S.p.A.
Via Tiburtina, 1159
I-00156 Rome (IT)

(72) Inventeur : Gandini, Marcello
Via Rosta 40
I-10090 Villarbasse (Torino) (IT)

(74) Mandataire : de Simone, Domenico et al
Ing. Barzanò & Zanardo Roma S.p.A. Via Piemonte 26
I-00187 Roma (IT)

## Description

La présente invention concerne une porte pour véhicules. Selon les techniques actuelles, les portes des véhicules, réalisées en tôle ou en matière plastique, doivent être pourvues de plusieurs parties complémentaires, telles que les glaces, leurs mécanismes de soulèvement, les serrures et les moyens d'actionnement de ces dernières, qui sont appliquées lorsque la porte est déjà installée sur la carrosserie du véhicule, par des opérations qui résultent difficilement organisables et dont l'exécution est difficile et incommode, à cause aussi de la réduite accessibilité de certaines positions d'assemblage. L'adoption de structures en matière plastique pour les portes n'a pas amélioré la situation, parce qu'aucun changement substantiel n'a été porté aux critères de projet des portes, lesquels ont été développés pour des constructions en tôle métallique et ne sont pas appropriés pour permettre la meilleure exploitation des propriétés des matières plastiques.

Le but de la présente invention est celui de rationaliser et de rendre plus économique la construction des portes pour véhicules, en évitant la nécessité d'effectuer des assemblages difficiles sur la porte installée. Un autre but de l'invention est celui de développer une structure de porte qui puisse être réalisée en matière plastique, avec l'exploitation la plus avantageuse des caractéristiques de ce matériau.

Selon l'invention, une porte pour véhicule comporte une structure en boîte avec une cavité intérieure et une ouverture inférieure, et un ensemble comprenant une glace et des guides et mécanismes de soulèvement associés, assemblé séparément et inséré par enfilage dans la cavité intérieure de la structure en boîte, à partir de ladite ouverture inférieure.

Grâce à ces caractéristiques, les opérations mécaniques relativement compliquées d'assemblage des mécanismes de soulèvement de la glace peuvent être effectuées séparément au lieu que sur la porte déjà montée, c'est-à-dire en des conditions industriellement bien plus avantageuses, tandis que sur la porte déjà montée il est seulement nécessaire d'installer l'ensemble monté séparément, ce qu'on peut faire en l'enfilant simplement du bas dans la cavité intérieure de la structure de la porte et y en le fixant. On rend ainsi possible soit une réduction des coûts de production des composants, soit spécialement une meilleure organisation de l'assemblage avec une réduction nette des coûts correspondants.

Ladite structure en boîte peut être réalisée en tôle, mais avantageusement elle peut aussi être réalisée en matière plastique. Suivant les différentes conditions d'opportunité qui peuvent se présenter, la structure en boîte en matière plastique peut être réalisée en une seule pièce, ou bien en assemblant deux coquilles, produites séparément et définissant entr'elles la cavité de la structure.

De préférence, ladite structure en boîte présente aussi une niche en correspondance du côté d'ouverture de la porte, et un ensemble de serrure est assemblé séparément, ledit ensemble de serrure étant inséré et fixé dans ladite niche de la structure en boîte de la porte.

Grâce à cette caractéristique, aussi le montage de la serrure, avec ses différents dispositifs d'ouverture et de blocage, est effectué séparément dans les meilleures conditions de travail, et sur la porte installée il ne reste qu'à insérer et fixer l'ensemble déjà monté, par des opérations réduites au minimum.

Les avantages de cette disposition sont exaltés au maximum si l'ensemble de serrure présente des moyens d'actionnement, comprenant les commandes d'ouverture et de blocage, disposés pour s'étendre extérieurement à la structure de la porte, du côté interne de celle-ci.

Ces caractéristiques et d'autres, et les avantages de l'objet de l'invention, ressortiront plus clairement de la suivante description d'une forme de réalisation, indiquée à titre d'exemple non limitatif et représentée schématiquement dans les dessins annexés, dans lesquels :

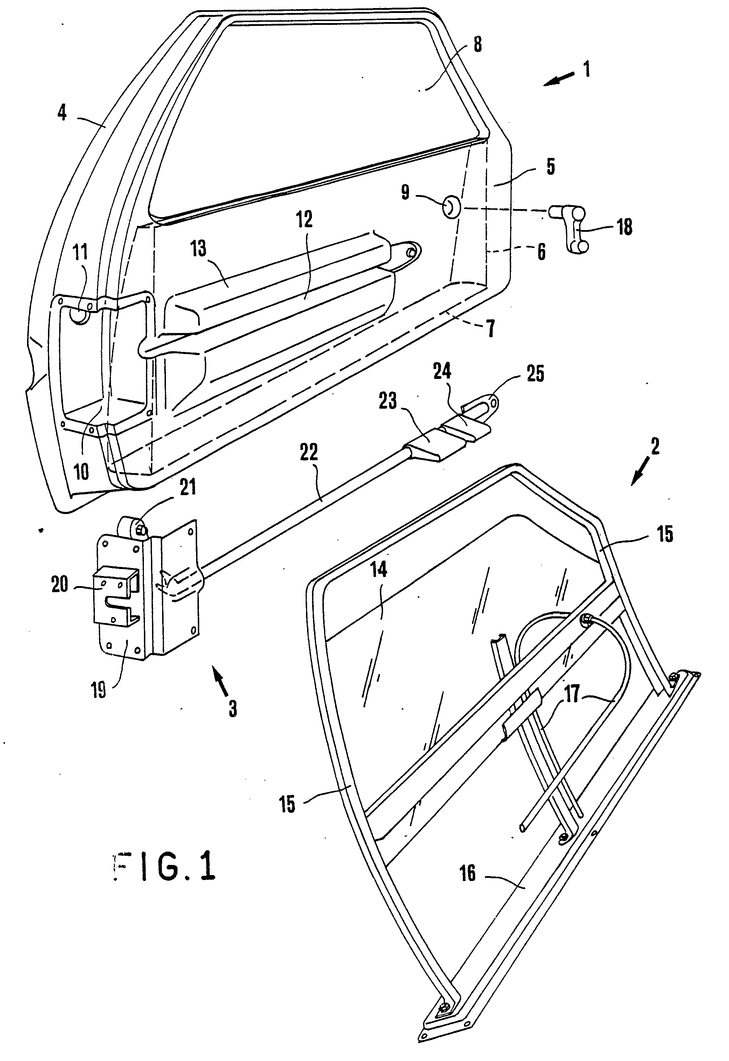

La figure 1 montre en perspective, à l'état encore séparé, une structure de porte en boîte, réalisée en matière plastique, et les ensembles de la glace et de la serrure, respectivement :

La figure 2 montre en section schématique la structure en boîte de la porte et l'ensemble de la glace en cours d'insertion ;

La figure 3 montre, d'une manière analogue à la figure 2, la structure en boîte de la porte et l'ensemble de la glace complètement inséré.

Par la référence 1 est indiquée généralement la structure en boîte de la porte, qui dans cet exemple est en matière plastique ; par la référence 2 l'ensemble comprenant la glace, et par la référence 3 l'ensemble de la serrure.

La structure 1 de la porte comporte deux coquilles, et précisément une coquille extérieure 4 et une coquille intérieure 5, lesquelles définissent entr'elles une cavité intérieure 6 avec une ouverture inférieure 7. Les deux coquilles 4 et 5 peuvent être réalisées séparément et ensuite connectées par soudure, encollage ou autre moyen, ou bien elles peuvent être constituées par deux portions d'une structure réalisée en une seule pièce, par exemple par moulage à rotation, et le choix parmi ces possibilités dépend des moyens de production qu'on a à disposition et des préférences de projet. Avantageusement, chaque coquille est formée par des parois relativement minces en matière plastique rigide, et les espaces qui résultent entre lesdites parois sont remplis avec une mousse plastique cellulaire, en conférant ainsi à l'ensemble une considérable stabilité et des bonnes caractéristiques d'isolation thermique et acoustique. Pour les mêmes raisons déjà exposées, chaque coquille peut aussi être constituée par plusieurs parties préparées séparément et ensuite assemblées et, éventuellement, certaines de ces parties peuvent être en un matériau métallique.

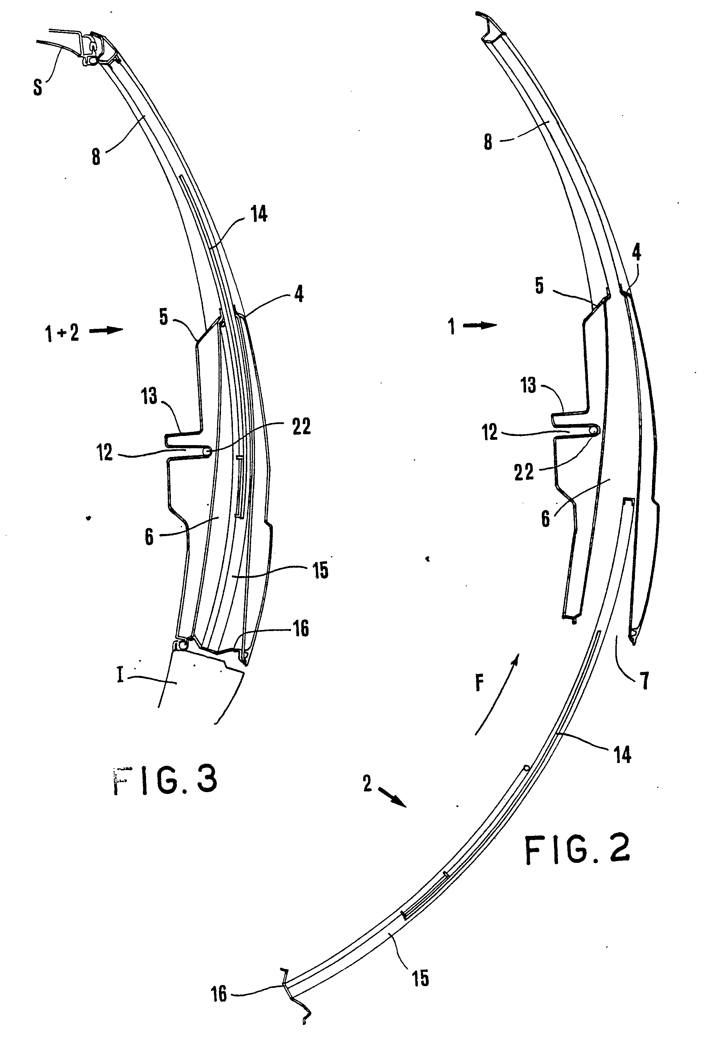

L'ensemble 2 comprend la glace 14, les relatives guides 15 fixées, dans ce cas, à une base 16, et le mécanisme 17 pour le soulèvement de la glace 14, ainsi que, éventuellement, des composants destinés à raidir et renforcer cette structure. L'ensemble est conformé et dimensionné de manière à correspondre à l'espace libre mis à disposition par la cavité intérieure 6 de la structure 1 de la porte, avec la base 16 qui, dans ce cas, ferme substantiellement l'ouverture inférieure 7, et avec la glace 14 qui s'étend en correspondance d'une fenêtre 8 définie par la structure 1. L'ensemble 2, séparément fabriqué et assemblé, est installé dans la structure 1 en l'enfilant du bas, suivant la flèche curve F, comme représenté dans la figure 2, jusqu'à l'obtention de la configuration définitive de la figure 3, dans laquelle la base 16 est fixée aux coquilles 4 et 5. La porte ainsi complétée est appropriée pour fermer d'une manière étanche une correspondante ouverture définie entre des éléments supérieurs S et inférieurs I de la carrosserie du véhicule, comme représenté dans la figure 3.

De préférence, l'accouplement entre la base 16 et le bord de l'ouverture 7 de la cavité 6 est effectué d'une manière non étanche sur le côté extérieur, de sorte que des infiltrations éventuelles d'eau dans la cavité 6 peuvent s'écouler librement à l'extérieur ; il n'est donc pas nécessaire de prévoir aucune étanchéité entre l'ensemble 2 de la glace et la coquille extérieure 4 de la structure 1.

Il est à remarquer que, dans d'autres formes d'exécution, la base 16 pourrait correspondre à une partie seulement de l'ouverture 7, ou bien elle pourrait se réduire à des simples moyens pour fixer l'ensemble 2 de la glace à la structure en boîte 1 de la porte.

Un trou 9 est prévu en une position appropriée dans la coquille intérieure 5, afin de permettre l'application d'une manivelle 18 d'actionnement du mécanisme 17 pour le soulèvement de la glace 14.

Du côté d'ouverture de la porte, la structure 1 forme une niche 10 communiquant avec l'extérieur par une ouverture 11. Séparément on fabrique et on monte un ensemble de serrure 3, comprenant une plaque 19 qui supporte les moyens 20 d'engagement avec la contre-serrure montée sur la carrosserie, un poussoir 21 ou autre moyen d'ouverture, destiné à être manœuvré de l'extérieur à travers l'ouverture 11, et une transmission 22 pour des leviers ou des autres moyens de commande 23 et 24, pour l'ouverture de la serrure à partir de l'intérieur et pour son blocage. Cet ensemble de serrure est appliqué à la structure 1 en insérant ses mécanismes dans la niche 10, laquelle est fermée par la plaque 19, et en faisant passer les moyens d'actionnement intérieurs 22-24 le long du côté intérieur de la structure 1, à laquelle ils sont fixés par l'intermédiaire d'un support d'extrémité 25. On évite ainsi l'onéreuse installation, normalement effectuée sous les panneaux de finissage de la porte, des moyens de transmission entre la serrure et ses commandes intérieures. De cette façon, la porte peut être complètement finie sur le côté intérieur, y inclus aussi, éventuellement, les revêtements ou accessoires esthétiques, avant l'application de la serrure.

Opportunément, la coquille intérieure 5 de la structure 1 est formée avec une saillie 13 formant un accoudoir. Dans cette saillie 13 est formé un évidement 12, qui permet le passage des moyens de transmission 22 de la serrure, et qui les cache d'une façon pratiquement totale, tout en permettant leur installation sans empêchement. De préférence, les moyens de transmission 22 sont constitués par une transmission tubulaire pour l'organe de commande 23, et par une tige coaxiale intérieure pour l'organe de commande 24.

La porte selon l'invention, constituée par les composants décrits et assemblée suivant le procédé indiqué, permet d'organiser de la meilleure façon l'assemblage d'un véhicule dont la porte fait partie, en évitant la nécessité d'opérations à effectuer sur la porte installée, ou en les réduisant à un minimum, avec une considérable contribution soit à la réalisation de portes ayant des caractéristiques avantageuses, soit à l'économie de la production.

Bien que, comme déjà dit, l'application de l'invention soit particulièrement avantageuse dans la réalisation de structures en matière plastique, elle résulte convenable aussi pour des structures en tôle métallique ou pour des structures en des matériaux hétérogènes.

L'invention s'applique à des portes de toute sorte, à savoir à des portes avant, portes arrière, portes uniques, portières postérieures et similaires. Naturellement, dans son application les formes des parties peuvent et doivent être différemment modifiées dans le but de les adapter aux exigences techniques et esthétiques des différents véhicules. En outre, toutes les parties indiquées peuvent être remplacées par leurs équivalents techniques, sans par cela s'éloigner du cadre de l'invention.

**Revendications**

1. Porte pour véhicules, caractérisée en ce qu'elle comprend une structure (1) en boîte avec une cavité intérieure (6) et une ouverture inférieure (7), et un ensemble (2) comprenant une glace (14) et des guides (15) et mécanismes (17) de soulèvement associés, assemblé séparément et enfilé dans la cavité intérieure (6) de la structure en boîte (1), à partir de ladite ouverture inférieure (7).

2. Porte pour véhicules selon la revendication 1, caractérisée en ce que ladite structure en boîte (1) est réalisée au moins en grande partie en matière plastique.

3. Porte pour véhicules selon la revendication 2, caractérisée en ce que ladite structure en boîte (1) en matière plastique est réalisée substantiellement en une seule pièce renfermant ladite cavité intérieure (6).

4. Porte pour véhicules selon la revendication 2, caractérisée en ce que ladite structure en boîte (1) en matière plastique est réalisée par assemblage d'au moins deux coquilles (4, 5) qui définissent entr'elles ladite cavité intérieure (6).

5. Porte pour véhicules selon la revendication 1, caractérisée en ce que ladite structure en boîte (1) présente des ouvertures (9) pour l'application de moyens (18) de commande des mécanismes (17) de soulèvement de la glace.

6. Porte pour véhicules selon la revendication 1, caractérisée en ce que ledit ensemble (2) de la glace (14) est assemblé sur une plaque de base (16) correspondante au moins en partie à ladite ouverture inférieure (7) de la structure en boîte (1) de la porte, et que ledit ensemble (2) est fixé dans ladite cavité intérieure (6) avec la plaque de base (16) qui ferme au moins en partie ladite ouverture inférieure (7).

7. Porte pour véhicules selon la revendication 6, caractérisée en ce que ladite plaque de base (16) est appliquée à la structure en boîte (1) sans étanchéité vers l'extérieur, pour permettre l'écoulement de toute infiltration d'eau dans la cavité (6) de la structure (1).

8. Porte pour véhicules selon la revendication 1, caractérisée en ce que ladite structure en boîte (1) présente une niche (10) en correspondance du côté d'ouverture de la porte, et qu'un ensemble (3) de serrure (20) avec des moyens (21 à 24) intérieurs et extérieurs de commande est assemblé séparément, ledit ensemble (3) de serrure étant inséré et fixé dans ladite niche (10) de la structure en boîte (1) de la porte.

9. Porte pour véhicules selon la revendication 8, caractérisée en ce que ledit ensemble (3) de serrure présente des moyens d'actionnement (22 à 24) comprenant les commandes d'ouverture et de blocage, disposés pour s'étendre extérieurement à la structure (1) de la porte, du côté interne de cette dernière.

10. Porte pour véhicules selon la revendication 9, caractérisée en ce que lesdits moyens d'actionnement (22 à 24) comportent une transmission tubulaire (22) pour l'une (23) des commandes et une tige coaxiale interne à ladite transmission tubulaire (22) pour l'autre commande (24).

11. Porte pour véhicules selon la revendication 9, caractérisée en ce que ladite structure en boîte (1) de la porte présente du côté intérieur une saillie (13) formant un accoudoir, traversée par un évidement (12) pour le passage desdits moyens d'actionnement (22 à 24) de la serrure (20).

12. Porte pour véhicules selon la revendication 2, caractérisée en ce que ladite structure en boîte (1) en matière plastique est constituée par des parois relativement minces en matière plastique rigide et par un remplissage avec une mousse plastique des espaces délimités par lesdites parois (figure 2).

13. Procédé pour la production d'une porte pour véhicules, caractérisé en ce qu'il comprend les opérations consistant à — réaliser une structure en boîte (1) avec une cavité intérieure (6) et une ouverture inférieure (7) ; — réaliser séparément un ensemble (2) comprenant une glace (14) et les relatives guides (15) et mécanismes (17) de soulèvement, éventuellement avec une plaque de base (16) ; — enfiler ledit ensemble (2) dans la cavité intérieure (6) de ladite structure en boîte (1) à travers ladite ouverture inférieure (7), éventuellement en fermant cette ouverture (7) en tout ou en partie par ladite base (16) ; — et fixer réciproquement les parties dans la position ainsi obtenue.

**Claims**

1. A door for vehicles, characterized in that it comprises a box-shaped structure (1) having an inner hollow space (6) and a lower opening (7), as well as an assembly (2) including a glass window (14), guides (15) and associated lifting contrivances (17), which are separately mounted and inserted into the inner hollow space (6) of the box-shaped structure (1), starting from said lower opening (7).

2. A door for vehicles according to claim 1, characterized in that said box-shaped structure (1) consists at least in great part of plastic material.

3. A door for vehicles according to claim 2, characterized in that said box-shaped structure (1) of plastic material substantially consists of a sole piece confining said inner hollow space (6).

4. A door for vehicles according to claim 2, characterized in that said box-shaped structure (1) of plastic material is carried out by assembling at least two shells (4, 5) which form therebetween said inner hollow space (6).

5. A door for vehicles according to claim 1, characterized in that said box-shaped structure (1) has holes (9) for applying control means (18) of the contrivances (17) for lifting the window.

6. A door for vehicles according to claim 1, characterized in that said assembly (2) of the window (14) is assembled on a base plate (16) at least in part fitting into said lower opening (7) of the box-shaped door structure (1) and that said assembly (2) is fastened within said hollow inner space (6) with the base plate (16) which at least in part closes said lower opening (7).

7. A door for vehicles according to claim 6, characterized in that said base plate (16) is applied to the box-shaped structure (1) without water-tightness for allowing the outflow of all the water infiltrated into the hollow space (6) of the structure (1).

8. A door for vehicles according to claim 1, characterized in that said box-shaped structure (1) has a recess (10) in correspondence of the opening side of the door and that an assembly (3) of lock (20) having inner and outer control means (21 to 24) is separately assembled, said locking assembled (3) being inserted into and fastened within said recess (10) of said box-shaped door structure (1).

9. A door for vehicles according to claim 8, characterized in that said locking assembly (3) has actuating means (22 to 24) comprising opening and locking controls arranged to extend outside the structure (1) of the door, on the inner side thereof.

10. A door for vehicles according to claim 9, characterized in that said actuating means (22 to 24) include a transmission tube (22) for one (23) of the actuating means and a coaxial rod within said transmission tube (22) for the other actuating means (24).

11. A door for vehicles according to claim 9, characterized in that said box-shaped structure (1) of the door has atits inner side a projection (13) forming an elbow rest, crossed by a channel (12) for receiving said actuating means (22 to 24) of the lock (20).

12. A door for vehicles according to claim 2, characterized in that said box-shaped structure (1) of plastic material is formed by relatively thin walls of a rigid plastic material and a plastic foam filling the spaces delimited by said walls (Fig. 2).

13. A process for manufacturing a door for vehicles, characterized in that it comprises the steps which consist in forming a box-shaped structure (1) having an inner hollow space (6) and a lower opening (7); separately mounting an assembly (2) including a window (14) and the respective guides (15) and lifting contrivances (17), possibly with a base-plate (16); introducing said assembly (2) into the inner hollow space (6) of said box-shaped structure (1) through said lower opening (7), eventually closing said opening (7) wholly or partially by said base plate (16) and mutually fixing the parts in the so obtained position.

**Patentansprüche**

1. Tuer fuer Fahrzeuge, dadurch gekennzeichnet, dass sie eine schachtelfoermige Struktur (1) mit einem inneren Hohlraum (6) und einer unteren Oeffung (7) aufweist, wobei eine Einheit (2) separat aus einem Fensterglas (14) Fuehrung (15) und Aufhebeeinrichtuhgen (17) zusammengebaut und in den inneren Hohlraum (6) durch die genannte untere Oeffung (7) eingesetzt wird.

2. Tuer fuer Fahrzeuge nach Anspruch 1, dadurch gekennzeichnet, dass die genannte schachtelfoermige Struktur (1) mindestens zum groessten Teil aus Kunststoff hergestellt ist.

3. Tuer fuer Fahrzeuge nach Anspruch 2, dadurch gekennzeichnet, dass die genannte schachtelfoermige Kunststoff-Struktur (1) wesentlich aus einem einzigen Stueck besteht, welches den genannten inneren Hohlraum umschliesst.

4. Tuer fuer Fahrzeuge nach Anspruch 2, dadurch gekennzeichnet, dass die genannte schachtelfoermige Struktur (1) aus Kunststoff durch Zusammenbau von mindestens zwei muschelfoermige Teilen hergestellt wird, die miteinander den genannten inneren Hohlraum bilden.

5. Tuer fuer Fahrzeuge nach Anspruch 1, dadurch gekennzeichnet, dass die genannte schachtelfoermige Struktur (1) Oeffnungen (9) aufweist, die zum Anbingen von Mitteln (18) zur Betaetigung der Aufhebeeinrichtungen (17) vorgehesen sind.

6. Tuer fuer Fahrzeuge nach Anspruch 1, dadurch gekennzeichnet, dass die genannte Einheit (2) des Fensterglases (14) auf einer Grundplatte (16) zusammengebaut wird, welche mindestens teilweise der genannten unteren Oeffnung (7) der schachtelfoermigen Struktur (1) der Tuer entspricht, wobei die genannte Einheit (2) im genannten Hohraum (6) mit der Grundplatte (16) gefestigt wird, die mindestens einen Teil der genannten unteren Oeffnung (7) schliesst.

7. Tuer fuer Fahrzeuge nach Anspruch 6, dadurch gekennzeichnet, dass die genannte Grundplatte (16) an die schachtelfoermige Struktur (1) in einer nach Aussen nicht wasserdichten Weise angebracht ist, um das Ausfliessen von allen Wassersickerungen aus dem Hohlraum (6) der Struktur (1) zu erlauben.

8. Tuer fuer Fahrzeuge nach Anspruch 1, dadurch gekennzeichnet, dass die genannte schachtelfoermige Struktur (1) eine Nische (10) an der Oeffnungsseite der Tuer aufweist und dass eine einen Schlosskasten (20) und aeussere Steuermittel (21 bis 24) aufweisende Schlosseinheit (3) separat zusammengebaut ist und in die genannte Nische (10) der schachtelfoermigen Struktur (1) der Tuer eingesetzt wird.

9. Tuer fuer Fahrzeuge nach Anspruch 8, dadurch gekennzeichnet, dass die genannte Schlosseinheit (3) Betaetigungsmittel (22 bis 24) zum Oeffnen und Schliessen der Tuer aufweist, die sich ausserhalb der Struktur (1) der Tuer an der Innenseite derselben erstrecken.

10. Tuer fuer Fahrzeuge nach Anspruch 9, dadurch gekennzeichnet, dass die genannten Betaetigungsmittel (22 bis 24) ein Uebertragungsrohr (22) fuer das eine Betaetigungsmittel (23) und einen koaxialen, innerhalb des genannten Uebertragungsrohrs angeordenten Stab fuer das andere Betaetigungsmittel (24) aufweisen.

11. Tuer fuer Fahrzeuge nach Anspruch 9, dadurch gekennzeichnet, dass die genannte schachtelfoermige Struktur (1) der Tuer an ihrer Innenseite einen eine Ellbogenlehne bildenden Vorsprung (13) aufweist, welcher eine Aushoehlung (12) zum Aufnehmen der genannten Betaetigungsmittel (22 bis 24) des Schlosskastens (20) hat.

12. Tuer fuer Fahrzeuge nach Anspruch 2, dadurch gekennzeichnet, dass die genannte schachtelfoermige Struktur (1) aus verhaeltnissmaessig duennen Waenden aus steifem Kunststoff besteht, wobei die von diesen Waenden begrenzten Raeume mit einem Kunststoffschaum ausgefuellt sind (Fig. 2).

13. Verfahren zur Herstellung einer Tuer fuer Fahrzeuge, dadurch gegenzeichnet, dass es aus den folgenden Stufen besteht :
— Herstellung einer schachtelfoermigen Struktur (1) mit einem inneren Hohlraum (6) und einer unteren Oeffnung (7) ;

— Vorbereitung einer separierten Elnheit (2), die ein Fensterglas (14) mit zugehoerigen Fuehrungen (15) und eine Aufhebe-Einrichtung (17), gegebenfalls mit einer Grundplatte (16) aufweist ;
— Einfuehrung der genannten Einheit (2) in den unteren Hohlraum (6) der genannten schachtelfoermigen Struktur (1) durch die genannte untere Oeffnung (7), wobei diese Oeffnung (7) gegebenfalls vollkommen oder teilweise von der genannten Grundplatte (16) geschlossen wird ;
— und Befestigung der Teile aneinander in der so erhaltenen Stellung.

0 128 621

FIG.1

**FIG. 3**

**FIG. 2**